# EUROPÄISCHE PATENTANMELDUNG

(11) **EP 1 508 885 A1**
(43) Veröffentlichungstag der Anmeldung: **23.02.2005**
(21) Anmeldenummer: 03018546.6
(22) Anmeldetag: 18.08.2003
(51) Int. Cl.: G08B 25/08, H04L 12/28, G08B 25/04, G08B 29/16

(54) **Verfahren und Übertragungskanal für die Übertragung mehrerer Informationsströme über ein gemeinsames Medium, sowie Gefahrenmeldeanlage**

(71) Anmelder: Siemens Building Technologies AG, 8034 Zürich (CH)
(72) Erfinder: Vollenweider, Walter, 8712 Stäfa (CH)
(74) Vertreter: Berg, Peter, Dipl.-Ing.

(57) **Zusammenfassung**

Zur gegenseitig unbeeinflussten und unabhängigen Übertragung mehrerer Informationsströme über ein gemeinsames Übertragungsmedium wird dass das gesamte verfügbare Frequenzband des Übertragungsmediums in mindestens zwei Teilbänder (FB1, FB2) unterteilt. Das erste Teilband (FB1) weist eine untere Grenzfrequenz (fᵤ) von mindestens 1 kHz, vorzugsweise 100 kHz auf. Das zweite Teilband (FB2) weist eine obere Grenzfrequenz (fₒ) auf, welche so gewählt ist, dass sich die Teilbänder sicher nicht überlappen. Im ersten Teilband (FB1) findet eine Informationsübertragung beliebiger Art und im zweiten Teilband (FB2) eine Informationsübertragung mit Mitteln der digitalen Übertragungstechnik statt. Im zweiten Teilband (FB2) können sicherheitsrelevante und im ersten Teilband (FB1) beliebige Informationen einer Sicherheitsanlage übertragen werden.

## Beschreibung

Die Erfindung liegt auf dem Gebiet der Übertragung mehrerer Informationsströme über ein gemeinsames Übertragungsmedium.

In der Praxis steht man oft vor dem Problem, dass über ein gegebenes Übertragungsmedium mehr Informationen als ursprünglich vorgesehen übertragen werden müssen. Das ist selbstverständlich nicht möglich, wenn das Medium bereits bis an die Grenze seiner theoretischen Übertragungskapazität ausgelastet ist. In vielen Fällen wird aber das Übertragungsmedium nur zu einem Bruchteil seiner Leistungsfähigkeit ausgenützt, so dass die Übertragung zusätzlicher Informationen möglich ist. Allerdings sind dafür zusätzliche Ausrüstungen zum Senden und Empfangen dieser zusätzlichen Informationen erforderlich.

Die Übertragungskapazität lässt sich besonders einfach erhöhen, wenn die verfügbare Bandbreite des Übertragungsmediums durch das ursprüngliche Übertragungssystem nicht vollständig ausgenützt wird. Beispielsweise weist eine Telefonleitung zwischen Zentrale und Teilnehmer eine nutzbare Bandbreite von einigen 100 kHz auf. Analoge Telefonie verwendet aber nur den Bereich zwischen 300 Hz und 3.4 kHz. Der Grund dafür liegt darin, dass einerseits trotz dieses beschränkten Frequenzbereichs eine genügend gute Sprachqualität erreicht wird, und andererseits die weiter führenden Verbindungsleitungen zwischen den Zentralen eine geringere Bandbreite als die angegebenen einigen 100 kHz aufweisen.

Diese für Telefongespräche nicht benötigte Übertragungskapazität kann für verschiedene zusätzliche Dienste benützt werden. Beispielsweise wurde in der Schweiz vor langer Zeit der Hochfrequenz-Telefonrundspruch eingeführt. Auf einer normalen Telefonleitung werden oberhalb des Sprachbandes mehrere Rundfunkkanäle in Amplitudenmodulation übertragen. Mit ähnlichen Verfahren werden auch zusätzliche Sprachkanäle oder die Gebühreninformation übertragen.

Die Übertragungscharakteristik innerhalb des zusätzlichen Frequenzbereichs ist in vielen Fällen nicht so ausgeglichen, wie man sich dies wünschen würde. So kann beispielsweise bei bestimmten Frequenzen eine sehr starke Dämpfung vorhanden sein. An eine digitale Übertragung in diesen schwierigen Frequenzen war erst zu denken, als genügend leistungsfähige und preisgünstige Mittel zur digitalen Signalverarbeitung verfügbar wurden. Beispielsweise kann dem Empfänger ein adaptives digitales Filter vorgeschaltet werden, dessen Frequenzgang das Inverse des Frequenzgangs der Leitung ist. Der resultierende gesamte Frequenzgang ist dann einigermassen gerade, so dass die digitale Datenübertragung möglich wird. Solche Verfahren werden beispielsweise bei ISDN (Integrated Services Digital Network) verwendet. ISDN ist ein Standard, der heute in der Telefonie weit verbreitet ist. Auch eine Übertragung nach dem ISDN-Standard belegt das verfügbare Frequenzband nicht vollständig. So sind die tiefsten Frequenzen und insbesondere die Frequenz 0 Hz nicht belegt.

Die genannten Übertragungsverfahren wurden auf dem Gebiet der Telegrafie und der Fernsprechtechnik erfunden und erstmals angewendet. Eine sehr ausführliche Darstellung dieser Technik findet man beispielsweise in dem Buch "Understanding Digital Subscriber Line Technology" von Th. Starr, J. M. Cioffi und P. J. Silverman, Prentice Hall, 1999. In neuerer Zeit wurden ähnliche Verfahren entwickelt, um auf Kabeln zur Stromversorgung zusätzliche Informationen zu übertragen. Diese Verfahren sind unter dem Begriff "Powerline Technology" bekannt. Ein bekannter Vorläufer der Powerline Technology ist die vor etwa 60 Jahren entstandene so genannte Tonfrequenz Rundsteuerung.

Durch die Erfindung soll nun ein Verfahren zur Übertragung von Informationen über ein Übertragungsmedium angegeben werden, welches insbesondere für die Bedürfnisse der Sicherheitstechnik geeignet ist, bei der bekanntlich für derartige Übertragungen von Informationen besondere Anforderungen bestehen. So gibt es Normen, die fordern, dass die Übertragung sicherheitsrelevanter Daten unabhängig von der Übertragung irgendwelcher anderer Daten erfolgen muss, so dass sicherheitsrelevante Daten heute üblicherweise über getrennte Übertragungsleitungen geführt werden. Es gibt aber auch Einrichtungen, welche solche Daten über eine gewöhnliche Telefonleitung führen. Allerdings wird für sicherheitsrelevante Daten der Frequenzbereich um 50 kHz verwendet, während die Telefongespräche weiter im Frequenzbereich zwischen 300 Hz und 3.4 kHz geführt werden. Es sei auch daran erinnert, dass seit einigen Jahren sicherheitsrelevante Daten auch über Funkkanäle übertragen werden können, wobei aber Funkkanäle naturgemäss nicht vollständig abgetrennt sind.

Die Erfindung betrifft ein Verfahren zur gegenseitig unbeeinflussten und unabhängigen Übertragung mehrerer Informationsströme über eine gemeinsames Übertragungsmedium. Das erfindungsgemässe Verfahren ist dadurch gekennzeichnet, dass das gesamte verfügbare Frequenzband des Übertragungsmediums in mindestens zwei Teilbänder unterteilt wird, von denen das erste Teilband eine untere Grenzfrequenz von mindestens 1 kHz, vorzugsweise mindestens 100 kHz, und das zweite Teilband eine obere Grenzfrequenz aufweist, welche so gewählt ist, dass sich die Teilbänder sicher nicht überlappen, und dass im ersten Teilband eine Informationsübertragung beliebiger Art und im zweiten Teilband eine Informationsübertragung mit Mitteln der digitalen Übertragungstechnik stattfindet.

Eine erste bevorzugte Ausführungsform des erfindungsgemässen Verfahrens ist dadurch gekennzeichnet, dass die obere Grenzfrequenz des zweiten Teilbandes etwa 10 kHz beträgt. Eine genaue Angabe der Grenzfrequenz ist nur scho deshalb nicht möglich, weil zur Auftrennung in zwei genau definierte Frequenzbänder Filter mit unendlich steiler Flanke erforderlich wären, die sich nur mit unendlich grossem Aufwand realisieren lassen.

Eine zweite bevorzugte Ausführungsform des erfindungsgemässen Verfahrens ist dadurch gekennzeichnet, dass im zweiten Teilband eine Übertragung von sicherheitsrelevanten Informationen zwischen Komponenten einer Gefahrenmeldeanlage erfolgt.

Die Erfindung geht von der Erkenntnis aus, dass die geforderte Unabhängigkeit der Übertragung sicherheitsrelevanter Daten von der Übertragung anderer Daten in einfacher Weise dadurch erreicht werden kann, dass die Übertragung der sicherheitsrelevanten Daten in einem getrennten Frequenzband erfolgt. Die sicherheitsrelevanten Daten werden im zweiten Teilband, also im Frequenzbereich unterhalb von beispielsweise 10 kHz mit Mitteln der digitalen Übertragungstechnik übertragen. Das erfindungsgemässe Verfahren unterscheidet sich von allen bisher bekannten Verfahren dadurch, dass bisher im zweiten Teilband ausschliesslich analoge Techniken verwendet werden. Eine digitale Übertragung im zweiten Frequenzband mit getrennten Schaltungsmitteln macht in den meisten Anwendungen keinen Sinn, weil der Übertragungskanal im ersten Teilband normalerweise und insbesondere bei Übertragung mit digitalen Mitteln eine wesentlich höhere Übertragungskapazität aufweist. Es ist deshalb im Normalfall wesentlich einfacher und billiger, alle zu übertragenden Informationen mit Mitteln der digitalen Schaltungstechnik zusammenzufassen und gemeinsam im ersten Frequenzband zu übertragen.

Die Erfindung betrifft weiter einen Übertragungskanal für das Kommunikationsnetzwerk einer Gefahrenmeldeanlage, mit einer die einzelnen Komponenten dieser Anlage verbindenden elektrischen Leitung, welcher für die gegenseitig unbeeinflusste und unabhängige Übertragung von mindestens zwei Informationsströmen ausgebildet ist.

Der erfindungsgemässe Übertragungskanal ist dadurch gekennzeichnet, dass zur Gewährleistung der Unabhängigkeit der Übertragung der mindestens zwei Informationsströme Mittel zur elektrischen Filterung sowie erste Schaltungsmittel zur Abtrennung eines ersten Frequenzbandes mit einer unteren Grenzfrequenz von mindestens 1 kHz und zweite Schaltungsmittel zur Abtrennung eines zweiten Frequenzbandes mit einer unterhalb der unteren Grenzfrequenz des ersten Frequenzbandes liegenden oberen Grenzfrequenz vorgesehen sind.

Eine erste bevorzugte Ausführungsform des erfindungsgemässen Übertragungskanals ist dadurch gekennzeichnet, dass im ersten Frequenzband Schaltungsmittel vorgesehen sind, die im wesentlichen eine Hochpasscharakteristik aufweisen, und dass im zweiten Frequenzband Schaltungsmittel vorgesehen sind, die im wesentlichen eine Tiefpasscharakterisitk aufweisen.

Es muss vermieden werden, dass im ersten Frequenzband niederfrequente Komponenten entstehen oder eingespeist werden, die ins zweite Frequenzband gelangen können, und es muss gleichzeitig vermieden werden, dass Komponenten mit hoher Frequenz die Funktion der Übertragungseinrichtung im zweiten Frequenzband stören könnten.

Eine zweite bevorzugte Ausführungsform des erfindungsgemässen Übertragungskanals ist dadurch gekennzeichnet, dass die untere Grenzfrequenz des ersten Frequenzbandes 100 kHz und die obere Grenzfrequenz des zweiten Frequenzbandes 10 kHz beträgt.

Eine dritte bevorzugte Ausführungsform des erfindungsgemässen Übertragungskanals ist dadurch gekennzeichnet, dass die genannten ersten Schaltungsmittel durch in Serie zur Leitung geschaltete Kondensatoren gebildet sind.

Eine vierte bevorzugte Ausführungsform des erfindungsgemässen Übertragungskanals ist dadurch gekennzeichnet, dass die genannten zweiten Schaltungsmittel durch in Serie zur Leitung geschaltete Induktivitäten gebildet sind.

Die Erfindung betrifft weiter eine Gefahrenmeldeanlage mit einer Zentrale, peripher angeordneten Gefahrenmeldern und Zusatzgeräten und mit einer die Zentrale mit den peripheren Komponenten verbindendenden Meldelinie, welche für die gegenseitig unbeeinflusste und unabhängige Übertragung von mindestens zwei Informationsströmen ausgebildet ist. Die erfindungsgemässe Gefahrenmeldeanlage ist dadurch gekennzeichnet, dass zur Gewährleistung der Unabhängigkeit der Übertragung der mindestens zwei Informationsströme Mittel zur elektrischen Filterung sowie erste Schaltungsmittel zur Abtrennung eines ersten Frequenzbandes mit einer unteren Grenzfrequenz von mindestens 1 kHz und zweite Schaltungsmittel zur Abtrennung eines zweiten Frequenzbandes mit einer unterhalb der unteren Grenzfrequenz des ersten Frequenzbandes liegenden oberen Grenzfrequenz vorgesehen sind.

Eine erste bevorzugte Ausführungsform der erfindungsgemässen Gefahrenmeldeanlage ist dadurch gekennzeichnet, dass die genannten zweiten Schaltungsmittel in der Zentrale vorgesehene, in Serie zur Meldelinie geschaltete Induktivitäten aufweisen.

Im folgenden wird die Erfindung anhand von Ausführungsbeispielen und der Zeichnungen näher erläutert; es zeigt:
- Fig. 1: eine schematische Darstellung eines erfindungsgemässen Übertragungskanals,
- Fig. 2: eine schematische Darstellung eines Koppelnetzwerks für die unabhängige Übertragung von zwei Informationsströmen im Übertragungskanal von Fig. 1,
- Fig. 3: eine schematische Darstellung eines ersten Ausführungsbeispiels einer auch bei Unterbrechung der Meldeleitung voll funktionsfähigen Sicherheitsanlage,
- Fig. 4: eine erste Variante der Sicherheitsanlage von fig. 3; und
- Fig. 5: eine zweite Variante der Sicherheitsanlage von Fig. 3.

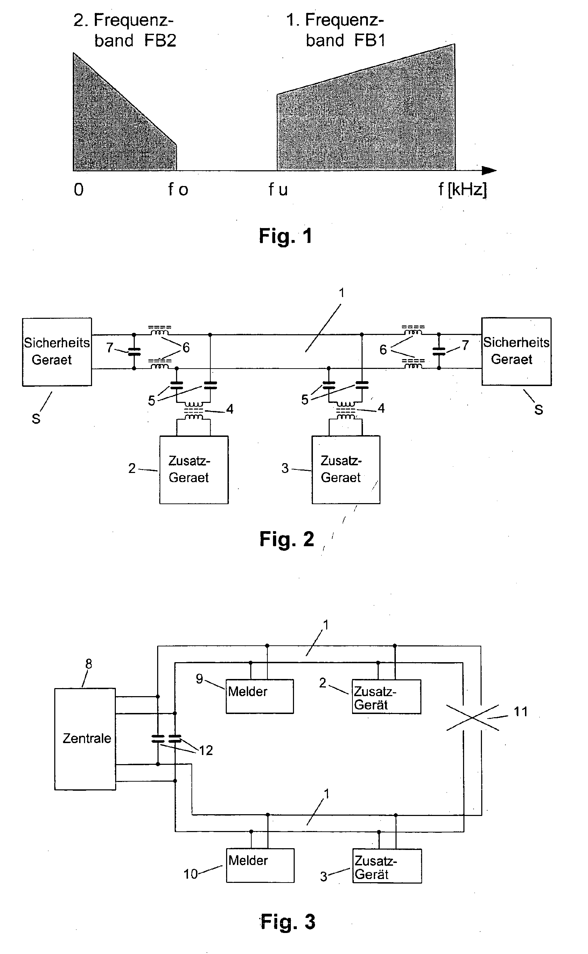

Der in Fig. 1 dargestellte Übertragungskanal ist so ausgebildet, dass eine gegenseitig unbeeinflusste und unabhängige Übertragung von mindestens zwei Informationsströmen erfolgen kann. Zur Gewährleistung der Unabhängigkeit der Übertragung der mindestens zwei Informationsströme sind Mittel zur elektrischen Filterung sowie erste Schaltungsmittel zur Abtrennung eines ersten Frequenzbandes FB1 mit einer unteren Grenzfrequenz fᵤ von mindestens 1 kHz und zweite Schaltungsmittel zur Abtrennung eines zweiten Frequenzbandes FB2 mit einer unterhalb der unteren Grenzfrequenz fᵤ des ersten Frequenzbandes FB1 liegenden oberen Grenzfrequenz fₒ vorgesehen. Wichtig ist, dass sich die beiden Frequenzbänder FB1 und FB2 nicht überlappen. In der Praxis beträgt beispielsweise die untere Grenzfrequenz fᵤ des ersten Frequenzbandes FB1 100 kHz und die obere Grenzfrequenz fₒ des zweiten Frequenzbandes FB2 10 kHz, wobei das zweite Frequenzband FB2 auch die Frequenz f=0 enthält.

In Fig. 2 bezeichnet das Bezugszeichen S zwei Sicherheitsgeräte einer Sicherheitsanlage, beispielsweise einer Gefahrenmeldeanlage. Die Sicherheitsgeräte S, die beispielsweise die Zentrale und ein Melder der Sicherheitsanlage sind, sind durch einen als Meldelinie 1 bezeichneten Übertragungskanal verbunden. Die Zentrale erfasst über die Meldelinie 1 die Signale der Melder und führt Steuerfunktionen aus. Zusätzlich zur beschriebenen Kommunikation dient die Meldelinie 1 auch zur Stromversorgung der Melder. Der Übertragungskanal zwischen den Sicherheitsgeräten S braucht nicht durch eine Leitung, sondern kann grundsätzlich durch jedes beliebige Übertragungsmedium gebildet sein, beispielsweise im Fall einer Funkverbindung zwischen den Sicherheitsgeräten S durch einen Funkkanal. Die Kommunikation zwischen den Sicherheitsgeräten S erfolgt im zweiten Frequenzband FB2 des Übertragungskanals.

Man kann sich vorstellen, dass eine Sicherheitsanlage neben den Sicherheitsgeräten S nachfolgend als Zusatzgeräte 2, 3 bezeichnete weitere Komponenten enthält. Derartige Zusatzgeräte 2, 3 können beispielsweise Kameras für die Überwachung von Fluchtwegen (siehe dazu EP-A-1 046 146) oder peripher verteilte Lautsprecher eines elektroakustischen Notfallwarnsystems (siehe dazu EP-A-1 111 565) sein. Wegen der hohen Anforderungen an die Sicherheit der Übertragung der von den Sicherheitsgeräten S gelieferten sicherheitsrelevanten Informationen, konnten bisher die Informationen der Zusatzgeräte 2, 3 nicht über die Meldelinie 1 übertragen werden. Durch die Auftrennung des Übertragungskanals in zwei einander nicht überlappende Frequenzbänder FB1 und FB2 können nun auch die informationen der Zusatzgeräte 2, 3 über den vorhandenen Übertragungskanal, im vorliegenden Fall also über die Meldelinie 1, übertragen werden. Die Unabhängigkeit der Übertragung in den beiden Frequenzbändern FB1 und FB2 kann verbessert und auch bei Ausfall einzelner Komponenten sicher gestellt werden, indem Koppelnetzwerke der in Fig. 2 dargestellten Art verwendet werden, welche entsprechend ausgelegt sind.

Diese Koppelnetzwerke umfassen darstellungsgemäss im ersten Frequenzband FB1 vorgesehene erste Schaltungsmittel, die im wesentlichen eine Hochpasscharakteristik aufweisen, und im zweiten Frequenzband FB2 vorgesehene zweite Schaltungsmittel, die im wesentlichen eine Tiefpasscharakterisitk aufweisen. Die ersten Schaltungsmittel sind beispielsweise durch Querspulen 4 und Längskondensatoren 5 für die Abtrennung des für Informationen der Zusatzgeräte 4 vorgesehenen ersten Frequenzbandes FB1 mit der unteren Grenzfrequenz fᵤ von beispielsweise > 100 kHz gebildet. Die zweiten Schaltungsmittel sind durch Längsspulen 6 und Querkondensatoren7' für die Abtrennung des für die sicherheitsrelevanten Informationen vorgesehenen zweiten Frequenzbandes FB2 mit der oberen Grenzfrequenz fₒ von beispielsweise 10kHz gebildet.

Im ersten Frequenzband FB1 können die folgenden Informationen von Zusatzgeräten 2, 3 übertragen werden, wobei es sich um seit langem bekannte Übertragungsverfahren handelt, die zweckmässigerweise hier neu eingesetzt werden können:
- Analoge Sprache, die frequenzmoduliert in verhältnismässig schmalen Kanälen übertragen wird. Mit Vorteil wird man Übertragungsverfahren wie beispielsweise im professionellen Sprechfunk mit einer Bandbreite von etwa 15 kHz verwenden. Zwischen diesen Kanälen ist ein gewisser Abstand erforderlich, so dass sie sich sicher nicht überlappen. Das nutzbare Frequenzband FB1 kann beispielsweise in 25 kHz breite Kanäle aufgeteilt werden, so dass beispielsweise ein Signal im Bereich 200-225 kHz, das nächste im Bereich 225-250 kHz, usw. bis beispielsweise 1975-2000 kHz übertragen wird.
- Analoge Sprache, die verhältnismässig breitbandig frequenzmoduliert ähnlich wie beim Rundfunk in etwa 150 kHz breiten Kanälen übertragen wird. Die Kanäle sind in diesem Fall beispielsweise 250-500 kHz, 500-750 kHz, und so weiter, bis beispielsweise 1750-2000 kHz.
- Ein analoges Fernsehsignal, das beispielsweise mit 1 MHz amplitudenmoduliert wird. Das untere Seitenband muss in diesem Fall wie beim konventionellen Fernsehen teilweise unterdrückt werden und belegt etwa den Bereich 500 kHz-1000 MHz. Falls ein PAL Fernsehsignal mit voller Auflösung verwendet wird, belegt das obere Seitenband etwa den Bereich 1-6 MHz, mit einem Farbhilfsträger bei 5433 kHz. Durch Reduktion der Zeilenzahl und der Bildwechselfrequenz kann die erforderliche Bandbreite beispielsweise in den Bereich 500-2000 kHz reduziert werden, wobei naturgemäss eine geringere Auflösung in Kauf genommen werden muss.
- Ein digitales Fernsehsignal, das mit einem geeigneten Verfahren komprimiert wird. Je nach gewünschter Qualität liegt die Datenrate bei einigen 100 kbit bis zu einigen Mbit/sec. Dieser Datenstrom wird mit einem geeigneten Verfahren, wie beispielsweise GMSK (Gaussian Minimal Shift Keying) wie bei den Mobiltelefonen, übertragen. Je nach der zu übertragenden Datenrate ergibt sich eine bestimmte Bandbreite und Bildqualität.
   Es ist zu erwarten, dass beispielsweise im Bereich von 500-2000 kHz ein Bild mit durchaus genügender Qualität übertragen werden kann.
- Eine digitale Datenübertragung mit Internet Protokoll zum Steuern von Sicherheitsgeräten. Geeignet ist beispielsweise ein Multiton-Übertragunsverfahren. Von den vielen bekannten Verfahren kann insbesondere das HomePlug Protokoll. Es kann erforderlich sein, gegenüber dem ursprünglichen Verfahren, das im Frequenzbereich von 4,5 bis 20 MHz arbeitet, die Frequenz zu reduzieren. Ein solches Verfahren kann beispielsweise auch im Frequenzbereich von 0,45 bis 2,0 MHz angewendet werden, wobei naturgemäss die erreichbare Datenrate im entsprechenden Verhältnis kleiner wird. Mit diesem und ähnlichen Übertragungsverfahren ist es im Bedarfsfall möglich, die Sicherheitsanlage mit dem Internet zu verbinden.
- Eine digitale Datenübertragung, die mit einem besonders für Telefonleitungen entwickelten digitalen Übertragungsverfahren arbeitet. Beispielsweise kann das ADSL (Asymmetric Digital Subscriber Line) Verfahren verwendet werden, das insbesondere für den Zugang zum Internet entwickelt wurde. Mit diesem Verfahren können digitale Daten aller Art und somit insbesondere auch digitalisierte Sprache, und digitalisierte Fernsehsignale übertragen werden.
- Eine Datenübertragung mit einem DSSS (Direct Sequence Spread Spectrum) Verfahren, wie es in den USA im 915 MHz Band erfolgt. Mit einem solchen Verfahren kann beispielsweise das Band von 200 kHz-2000 MHz belegt und eine Datenrate von einigen 10 kbit/sec erreicht werden. Damit ist Sprachübertragung oder die Steuerung von Sicherheitsgeräten und Alarmübertragung möglich. Der Vorteil von DSSS liegt darin, dass mehrere Verbindungen unkoordiniert über das gleiche Medium möglich sind.

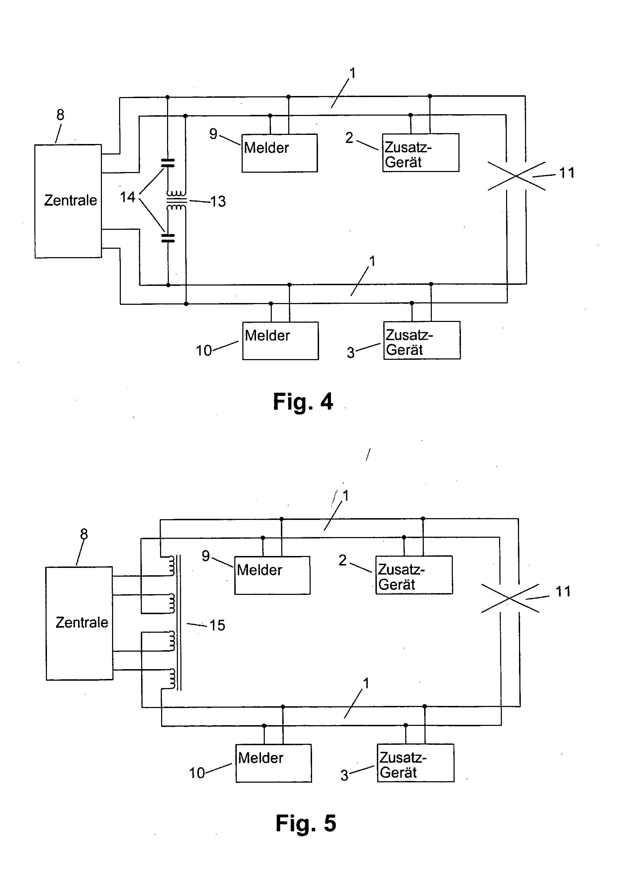

Sicherheitsanlagen, die höheren Ansprüchen genügen müssen, werden üblicherweise so ausgelegt, dass ihre Funktion auch dann gewährleistet ist, wenn die Meldeleitung an einer Stelle unterbrochen ist. Zu diesem Zweck werden die beiden Enden der Meldelinie 1 zur Zentrale 1 geführt, so dass sich eine Schleife mit im wesentlichen zwei Ästen ergibt. Fig. 3 zeigt ein erstes Ausführungsbeispiel einer Sicherheitsanlage, die auch bei Unterbrechung der Schleife voll funktionsfähig ist. Die Meldelinie 1 ist an eine Zentrale 8 angeschlossen, welche alle notwendigen Schaltungsmittel enthält, um Signale im ersten Frequenzbereich genügend abzutrennen. An die Meldeleitung 1 sind Melder 9, 10 sowie Zusatzgeräte 2, 3 mit den jeweils notwendigen Schaltungsmitteln (siehe dazu Fig. 2) angeschaltet. Die Melder 9, 10 übertragen ihre Informationen im zweiten Frequenzbereich und die Zusatzgeräte 2, 3 übermitteln ihre Informationen im ersten Frequenzbereich.

Im Normalfall ist die Meldelinie 1 nicht unterbrochen und bildet eine vom Ausgang der Zentrale 8 weg und wieder zu dieser zurückführende geschlossene Schleife. Es kann aber vorkommen, dass die Meldelinie 1 beispielsweise an einer Stelle 11 unterbrochen ist. Dann kann die Zentrale 8 weiterhin mit dem Melder 9 über den oberen und mit dem Melder 10 über den unteren Ast der Meldelinie 1 verkehren, wogegen eine direkte Kommunikation zwischen den Zusatzgeräten 2, 3 nicht mehr möglich ist. Damit auch die Zusatzgeräte 2, 3 weiter miteinander verkehren können, sind zwischen die beiden Äste der Meldelinie im Bereich ihrer mit der Zentrale 8 verbundenen Enden zwei Koppelkondensatoren 12 eingefügt, wodurch die beiden genannten Äste der Meldelinie 1 für höhere Frequenzen miteinander verbunden sind.

Bei dem in Fig. 4 dargestellten Ausführungsbeispiel einer auch bei Unterbrechung der schleifenförmigen Meldelinie 1 voll funktionsfähigen Sicherheitsanlage mit Zusatzgeräten 2, 3 sind die Koppelkondensatoren 12 (Fig. 3) durch einen Transformer 13 ersetzt, der höherfrequente Spannungen vom einen der beiden genannten Äste der aufgetrennten Meldelinie in das andere hinüberkoppelt. Um einen Kurzschluss bei tiefen Frequenzen zu vermeiden, können zwei Seriekondensatoren 14 vorgesehen sein.

Bei dem in Fig. 5 dargestellten Ausführungsbeispiel einer auch bei Unterbrechung der schleifenförmigen Meldelinie 1 voll funktionsfähigen Sicherheitsanlage mit Zusatzgeräten 2,3 sind ebenfalls die Koppelkondensatoren 12 des Ausführungsbeispiels von Fig. 3 nicht vorhanden. Die Zentrale 8 enthält beim Ausführungsbeispiel von Fig. 5 nicht mehr alle für die Abtrennung von höherfrequenten Signalen im ersten Frequenzbereich erforderlichen zweiten Schaltungsmittel; statt der Längsspulen 6 ist ein Transformer 15 mit vier Wicklungen vorgesehen, welche die vier Längsspulen 6 des Ausführungsbeispiels von Fig. 2 ersetzen. Gleichzeitig kann über den gemeinsamen Kern des Transformers 15 eine Übertragung höherfrequenter Signale von einem der beiden genannten Äste der aufgetrennten Meldelinie 1 in den anderen erfolgen.

## Patentansprüche

1. Verfahren zur gegenseitig unbeeinflussten und unabhängigen Übertragung mehrerer Informationsströme über ein gemeinsames Übertragungsmedium, **dadurch gekennzeichnet, dass** das gesamte verfügbare Frequenzband des Übertragungsmediums in mindestens zwei Teilbänder (FB1, FB2) unterteilt wird, von denen das erste Teilband (FB1) eine untere Grenzfrequenz (fᵤ) von mindestens 1 kHz, vorzugsweise 100 kHz und das zweite Teilband (FB2) eine obere Grenzfrequenz (fₒ) aufweist, welche so gewählt ist, dass sich die Teilbänder sicher nicht überlappen, und dass im ersten Teilband (FB1) eine Informationsübertragung beliebiger Art und im zweiten Teilband (FB2) eine Informationsübertragung mit Mitteln der digitalen Übertragungstechnik stattfindet.

2. Verfahren nach Anspruch 1, **dadurch gekennzeichnet, dass** die obere Grenzfrequenz (fₒ) des zweiten Teilbandes (FB2) etwa 10 kHz beträgt.

3. Verfahren nach Anspruch 1 oder 2, **dadurch gekennzeichnet, dass** im zweiten Teilband (FB2) eine Übertragung von sicherheitsrelevanten Informationen zwischen Komponenten (2, 3) einer Gefahrenmeldeanlage erfolgt.

4. Übertragungskanal für das Kommunikationsnetzwerk einer Gefahrenmeldeanlage, mit einer die einzelnen Komponenten dieser Anlage verbindenden elektrischen Leitung (1), welcher für die gegenseitig unbeeinflusste und unabhängige Übertragung von mindestens zwei Informationsströmen ausgebildet ist, **dadurch gekennzeichnet, dass** zur Gewähleistung der Unabhängigkeit der Übertragung der mindestens zwei Informationsströme Mittel zur elektrischen Filterung sowie erste Schaltungsmittel zur Abtrennung eines ersten Frequenzbandes (FB1) mit einer unteren Grenzfrequenz (fᵤ) von mindestens 1 kHz und zweite Schaltungsmittel zur Abtrennung eines zweiten Frequenzbandes (FB2) mit einer unterhalb der unteren Grenzfrequenz (fᵤ) des ersten Frequenzbandes (FB1) liegenden oberen Grenzfrequenz (fₒ) vorgesehen sind.

5. Übertragungskanal nach Anspruch 4, **dadurch gekennzeichnet, dass** im ersten Frequenzband (FB1) Schaltungsmittel vorgesehen sind, die im wesentlichen eine Hochpasscharakteristik aufweisen, und dass im zweiten Frequenzband (FB2) Schaltungsmittel vorgesehen sind, die im wesentlichen eine Tiefpasscharakterisitk aufweisen.

6. Übertragungskanal nach Anspruch 5, **dadurch gekennzeichnet, dass** die untere Grenzfrequenz (fᵤ) des ersten Frequenzbandes (FB1) 100 kHz und die obere Grenzfrequenz (fₒ) des zweiten Frequenzbandes (FB2) 10 kHz beträgt.

7. Übertragungskanal nach einem der Ansprüche 4 bis 6, **dadurch gekennzeichnet, dass** die genannten ersten Schaltungsmittel in Serie zur Leitung (1) geschaltete Kondensatoren (5) enthalten.

8. Übertragungskanal nach einem der Ansprüche 4 bis 7, **dadurch gekennzeichnet, dass** die genannten ersten Schaltungsmittel Querspulen (4) enthalten.

9. Übertragungskanal nach einem der Ansprüche 4 bis 8, **dadurch gekennzeichnet, dass** die genannten zweiten Schaltungsmittel in Serie zur Leitung (1) geschaltete Induktivitäten (6) enthalten.

10. Übertragungskanal nach einem der Ansprüche 4 bis 9, **dadurch gekennzeichnet, dass** die genannten zweiten Schaltungsmittel Querkondensatoren (7) enthalten.

11. Übertragungskanal nach einem der Ansprüche 4 bis 10, **dadurch gekennzeichnet, dass** das zweite Frequenzband (FB2) für die Übertragung von sicherheitsrelevanten Informationen zwischen den Komponenten (S) der Gefahrenmeldeanlage vorgesehen ist.

12. Übertragungskanal nach Anspruch 11, **dadurch gekennzeichnet, dass** das erste Frequenzband (FB1) für die Übertragung von nicht sicherheitsrelevanten Informationen und/oder Daten von an die elektrische Leitung (1) angeschlossenen Zusatzgeräten (2, 3) vorgesehen ist.

13. Übertragungskanal nach Anspruch 12, **dadurch gekennzeichnet, dass** die genannten Zusatzgeräte (2, 3) durch Videokameras, Lautsprecher, Mikrofone oder Signaleinrichtungen für Evakuation und/oder Fluchtwegsteuerung gebildet sind.

14. Gefahrenmeldeanlage mit einer Zentrale (8), peripher angeordneten Gefahrenmeldern (9, 10) und Zusatzgeräten (2, 3) und mit einem die Zentrale (8) mit den peripheren Komponenten (9, 10; 2, 3) verbindendenden Meldelinie (1), welche für die gegenseitig unbeeinflusste und unabhängige Übertragung von mindestens zwei Informationsströmen ausgebildet ist, **dadurch gekennzeichnet, dass** zur Gewährleistung der Unabhängigkeit der Übertragung der mindestens zwei Informationsströme Mittel zur elektrischen Filterung sowie erste Schaltungsmittel zur Abtrennung eines ersten Frequenzbandes (FB1) mit einer unteren Grenzfrequenz (fᵤ) von mindestens 1 kHz und zweite Schaltungsmittel zur Abtrennung eines zweiten Frequenzbandes (FB2) mit einer unterhalb der unteren Grenzfrequenz (fᵤ) des ersten Frequenzbandes (FB1) liegenden oberen Grenzfrequenz (fₒ) vorgesehen sind.

15. Gefahrenmeldeanlage nach Anspruch 14, **gekennzeichnet durch** dem ersten Frequenzband (FB1) zugeordnete Schaltungsmittel, die im wesentlichen eine Hochpasscharakteristik aufweisen, und **durch** dem zweiten Frequenzband (FB2) zugeordnete Schaltungsmittel, die im wesentlichen eine Tiefpasscharakterisitk aufweisen.

16. Gefahrenmeldeanlage nach Anspruch 15, **dadurch gekennzeichnet, dass** die genannten zweiten Schaltungsmittel in der Zentrale (8) vorgesehene, in Serie zur Meldelinie (1) geschaltete Induktivitäten (6) aufweisen.

17. Gefahrenmeldeanlage nach Anspruch 16, bei welcher die Meldelinie (1) eine geschlossene Schleife mit einem von der Zentrale (8) weg- und einem zur Zentrale (8) zurückführenden Ast bildet, **dadurch gekennzeichnet, dass** die beiden Äste der Schleife über Koppelkondensatoren (12) verbunden sind, welche für die Übertragung von höher frequenten Signalen zwischen den beiden Ästen im Fall einer Unterbrechung der Schleife vorgesehen sind.

18. Gefahrenmeldeanlage nach Anspruch 16, bei welcher die Meldelinie (1) eine geschlossene Schleife mit einem von der Zentrale (8) weg- und einem zur Zentrale (8) zurückführenden Ast bildet, **dadurch gekennzeichnet, dass** die beiden Äste der Schleife über einen ersten Transformer (13) verbunden sind, welcher für die Übertragung von höher frequenten Signalen zwischen den beiden Ästen im Fall einer Unterbrechung der Schleife vorgesehen ist.

19. Gefahrenmeldeanlage nach Anspruch 18, **dadurch gekennzeichnet, dass** der Transfomer (13) mit den Ästen der Schleife über Seriekondensatoren (14) verbunden ist.

20. Gefahrenmeldeanlage nach Anspruch 15, bei welcher die Meldelinie (1) eine geschlossene Schleife mit einem von der Zentrale (8) weg- und einem zur Zentrale (8) zurückführenden Ast bildet, **dadurch gekennzeichnet, dass** die genannten zweiten Schaltungsmittel einen zwischen den beiden Ästen der Schleife vorgesehenen zweiten Transformer (15) mit vier Wicklungen und einem gemeinsamen Kern umfassen, und dass über den gemeinsamen Kern im Fall einer Unterbrechung der Schleife eine Übertragung von höher frequenten Signalen zwischen den beiden Ästen erfolgt.
